(19) Europäisches Patentamt
European Patent Office
Office européen des brevets

(11) Publication number: **0 091 836 B1**

# (12) EUROPEAN PATENT SPECIFICATION

(45) Date of publication of patent specification: **07.01.88**

(51) Int. Cl.[4]: **C 08 G 65/32**, C 08 G 65/28, C 08 G 65/20, C 08 G 59/04

(21) Application number: **83302127.2**

(22) Date of filing: **14.04.83**

## (54) A process for production of an epoxidized polyether.

(30) Priority: **14.04.82 JP 60930/82**

(43) Date of publication of application: **19.10.83 Bulletin 83/42**

(45) Publication of the grant of the patent: **07.01.88 Bulletin 88/01**

(84) Designated Contracting States: **DE FR GB**

(56) References cited:
**CH-A- 476 051**
**DE-A-1 618 239**
**GB-A-1 279 775**

(73) Proprietor: **JAPAN SYNTHETIC RUBBER CO., LTD.**
**11-24, Tsukiji-2-chome Chuo-ku**
**Tokyo 104 (JP)**

(72) Inventor: **Yasuda, Kenji**
**50, Ogurisunakayamadacho**
**Fushimi-ku Kyoto (JP)**
Inventor: **Yokoyama, Yasuaki**
**JSR-SHATAKU 1-407, 29 Aobadai 2-chome**
**Midori-ku Yokohama (JP)**
Inventor: **Matsumoto, Shuichi**
**19-21, Sumiyoshidai**
**Midori-ku Yokohama (JP)**
Inventor: **Harada, Kunihiro**
**2657-6, Naruse**
**Machida-shi (JP)**

(74) Representative: **Tubby, David George et al**
**MARKS & CLERK 57-60 Lincoln's Inn Fields**
**London WC2A 3LS (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 091 836 B1

Courier Press, Leamington Spa, England.

**Description**

The present invention relates to a process for producing an epoxidized polyether.

Most epoxy resins in current industrial production are based upon epoxy compounds of the bisphenol A type because not only do such compounds have highly reactive epoxy groups, but also the bisphenol A residues in the resins impart heat resistance and the hydroxy groups impart adhesive properties. As a result, epoxy resins are tough, have good heat resistance, have good chemical resistance and are adhesive. Substantially no other resins have this combination of characteristics. As a result, epoxy resins based upon bisphenol A-type compounds are widely used as electrical insulators and coating materials and in laminates, structural materials and materials for civil engineering and construction. The epoxy compound, which is the main constituent of the resin, is rarely used alone and it is common to incorporate various additives, for example: curing agents, such as polymethylenediamine, polyetherdiamine, isophorone diamine, *m*-phenylenediamine, 2,4-toluenediamine, phthalic anhydride, or maleic anhydride; reactive diluents such as styrene oxide, glycidyl methacrylate, allyl glycidyl ether or diglycidyl ether; fillers, such as silica, mica or quartz powder; and curing accelerators, such as phenol, bisphenol A, salicylic acid or tin octylate. One of the reasons for the widespread use of epoxy resins is that various characteristics can be imparted to them by appropriate adjustment of the nature and amounts of such additives.

Although, as described above, epoxy resins have many valuable characteristics, it has become apparent that there are various ways in which they could still be improved. One disadvantage of the epoxy resins, which is a major defect from an industrial point of view, is that they have poor flexibility. In particular, epoxy resins of the bisphenol A type are generally insufficiently soft and are liable to crack when used for coating elastic bodies.

As a result, much research has been undertaken in an attempt to impart high flexibility to epoxy resins. One method which has been proposed is simply to blend an elastomer with the epoxy resin; however, it is technically very difficult to disperse sufficiently reproducibly an elastomer having a suitable particle size in the resin and the method is therefore difficult to operate on an industrial scale. Accordingly, research has gradually tended to be directed towards the incorporation of reactive flexibility-imparting agents into the epoxy resin molecule and various such agents have been developed. However, no such agent has been produced which satisfactorily fulfills all of the following requirements: it should be sufficiently miscible with the epoxy compound which is the main constituent of the resin and with the curing agent; it should not adversely affect the various characteristics, such as the mechanical characteristics or impact resistance, of the epoxy resin; and it should not add unduly to the production cost of the resin.

We have now discovered that these requirements can be met by producing a polyoxytetramethylene glycol containing epoxy groups.

Polyoxytetramethylene glycols are known as starting materials for the production of polyurethanes and polyesters and are in general produced by the ring-opening polymerization of tetrahydrofuran. Polyoxytetramethylene glycols are reactive polymers having a hydroxy group attached to each end of the molecule and, particularly when they are reacted with a diisocyanate to produce a polyurethane, the resulting polyurethane has superior mechanical characteristics and resistance to hydrolysis, compared with polyurethanes produced using other polymeric glycols. Accordingly, polyoxytetramethylene glycols are widely used in industry. They have a structure whose skeleton comprises regularly repeated oxytetramethylene units, and it is believed to be this which imparts their excellent mechanical characteristics and strength.

Thus, the present invention provides processes for producing an epoxidized polyether containing oxytetramethylene units having a halogen content of 0.3% by weight or less and having on average per molecule at least 0.9 epoxy groups represented by the formula (I):

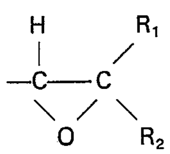

(I)

in which $R_1$ and $R_2$, which may be the same or different, each represents a hydrogen atom or an alkyl group. We prefer those polyethers in which $R_1$ and $R_2$ each represent a hydrogen atom or a $C_1$—$C_5$ alkyl group, such as a methyl group or an ethyl group, most preferably a hydrogen atom.

GB 1 159 840 describes a procedure in which a diglycidyl polymeric ether is produced by polymerising tetrahydrofuran with the aid of a Lewis acid catalyst, using epichlorhydrin as polymerisation initiator and 3-chloro-1,2-propanediol as chain stopper, to obtain a linear polymer having terminal chlorohydrin ether groups by reaction with an alkaline compound to form the diglycidyl polymeric ether.

This method is stated to produce such polyethers with a chlorine content of about 1 to 1.5 per cent, and the Examples of the method as described therein may indeed give polyethers with even higher chlorine contents than this.

The method envisaged in the prior art uses a halogenated chain stopper component. The method of the present invention, on the other hand, produces polyethers with a very low chlorine content, 0.3% by

weight or less (which polyethers have therefore better electrical insulating properties) by procedures avoiding the use of such halogenated materials, and thus following different polymerisation mechanisms.

Processes of the present invention for producing the above epoxidized polyether are as follows:

Process 1

In this process, tetrahydrofuran is polymerised, in the presence or absence of an inert solvent, in the presence of the following three components: (A) at least one Lewis acid and/or ether complex of a Lewis acid; (B) an halohydrin; and (C) a hydrocarbon compound having one or more hydroxy groups per molecule to give a hydroxypolyether, which is then subjected to dehydrohalogenation.

Process 2

A polyoxytetramethylene glycol is allowed to react, in the presence or absence of an inert solvent, with the components: (D) at least one Lewis acid and/or ether complex of a Lewis acid; and (E) en epihalohydrin, to give a hydroxypolyether which is then subjected to dehydrohalogenation.

Preferred Lewis acids and ether complexes thereof, which may be used as components (A) and (D) in Processes 1 and 2, are, in view of their ease of handling and good catalytic activity: metal and non-metal halides, such as boron trifluoride, phosphorus pentafluoride, arsenic pentafluoride, antimony pentafluoride, antimony pentachloride, aluminium chloride, aluminium fluoride, stannic chloride, titanium chloride and ferric chloride; solid acids, such as silicon dioxide, aluminium oxide, zinc oxide and silicon dioxide-aluminium oxide; and complexes of halides, such as boron trifluoride, phosphorus pentafluoride or antimony pentafluoride, with a linear or cyclic ether, such as dimethyl ether, diethyl ether, tetrahydrofuran or anisole. In view of their relative availability and catalytic activity, the most preferred compounds for use as components (A) and (D) are boron trifluoride, phosphorus pentafluoride, arsenic pentafluoride, antimony pentafluoride, aluminium chloride, stannic chloride and complexes of boron trifluoride, phosphorous pentafluoride or antimony pentafluoride with dimethyl ether, diethyl ether, dibutyl ether, tetrahydrofuran or anisole.

Examples of epihalohydrins which may be used as components (B) and (E) in Processes 1 and 2, include epifluorohydrin, epichlorohydrin, epibromohydrin and èpiiodohydrin, of which epichlorohydrin and epibromohydrin are preferred in view of their ready availability and good catalytic activity.

Examples of compounds having at least one hydroxy group per molecule, which may be used as component (C) in Process 1, include for example: monohydroxy compounds such as methanol, ethanol and butanol; dihydroxy compounds, such as ethylene glycol, trimethylene glycol, 1,4-butanediol, 2,3-butylene glycol and pentamethylene glycol; trihydroxy compounds, such as trimethylolpropane and glycerol, tetrahydroxy compounds, such as diglycerol and pentaerythritol; pentahydroxy compounds, such as glucose; heptahydroxy compounds, such as heptitol; and octahydroxy compounds, such as octitol and lactose. Of these, the mono- to penta-hydroxy compounds are preferred in view of their relative cheapness and ready availability, particularly methanol, ethanol, butanol, ethylene glycol, 1,4-butanediol, trimethylolpropane and diglycerol.

The dehydrohalogenation which is required in both of Processes 1 and 2 is effected by reaction with a dehydrohalogenating agent, particularly a basic compound, such as calcium hydroxide, lithium hydroxide, sodium hydroxide, potassium hydroxide or collidine or aqueous solutions or alcoholic solutions thereof, in view of their reactivity, ready availability and cost. We particularly prefer to use aqueous solutions of sodium hydroxide or potassium hydroxide, preferably having a concentration of from 5 to 45% by weight.

The polyoxytetramethylene glycol used in Process 2 is preferably a compound having a number average molecular weight of from 300 to 20,000, more preferably from 500 to 10,000, but the molecular weight is not critical to the proper functioning of the process.

In Process 1, the amounts of tetrahydrofuran, component (A), component (B) and component (C) and the quantitative relationships between these components are such as to satisfy the following Conditions (1), (2) and (3):

Condition (1)

The molar ratio of component (A) to tetrahydrofuran is from 0.001:1 to 0.1:1, more preferably from 0.005:1 to 0.05:1. If this molar ratio is less than 0.001:1 the catalytic effect of component (A) is reduced; moreover, the yield of the hydroxypolyether is low and the hydroxypolyether formed has a low hydroxy group functionality; consequently, the yield of the epoxidized polyether is low and the epoxidized polyether has a low epoxy group functionality. On the other hand, if the molar ratio exceeds 0.1:1, an unnecessarily large amount of component (A) is used, which increases the cost and leaves residues of component (A) in the hydroxypolyether; these residues must be removed prior to dehydrohalogenation, which is difficult to effect thoroughly, and this sometimes hinders epoxidization.

Conditon (2)

The molar ratio of component (B) to tetrahydrofuran is 0.2:1 or less, more preferably 0.05:1 or less. If this molar ratio exceeds 0.2:1, copolymerization of tetrahydrofuran with the epihalohydrin used as component (B) takes place and the regularity of tetraoxymethylene units in the hydroxypolyether is disturbed, with the result that the final epoxydized polyether has a low epoxy group functionality.

Condition (3)

The ratio of moles of component (B) to gram equivalents of hydroxy groups in component (C) is from 0.8:1 to 2:1 and most preferably from 1:1 to 1.25:1. If this ratio is less than 0.5:1, a considerable proportion, for example 50% or more, of the hydroxy groups in the hydroxypolyether are primary groups, with the result that the epoxidized polyether obtained by dehydrohalogenation of this hydroxypolyether has a reduced epoxy group functionality. On the other hand, if the ratio exceeds 5:1, the epihalohydrin, which forms component (B), is present in a copolymerized form as a large proportion of the hydroxypolyether.

In Process 2, the amounts and relative proportions of the polyoxytetramethylene glycol, component (D) and component (E) should satisfy the following Conditions (4) and (5):

Condition (4)

The ratio of moles of components (D) to gram equivalents of hydroxy groups in the polyoxytetramethylene glycol is from 0.02:1 to 2:1, more preferably from 0.1:1 to 1:1. If this ratio is less than 0.02:1, the catalytic activity of component (D) is reduced, whereas, if this ratio exceeds 2:1, an unnecessarily large amount of component (D) is used, thus increasing the cost of the process.

Condition (5)

The ratio of moles of component (E) to gram equivalents of hydroxy groups in the polyoxytetramethylene glycol is from 0.5:1 to 3:1, more preferably from 0.8:1 to 2:1 and most preferably from 1:1 to 1.25:1. If this ratio is less than 0.5:1, the resulting epoxidized polyether has a reduced functionality. On the other hand, if the ratio exceeds 3:1, a homopolymer of the epihalohydrin used as component (E) is produced as a by-product.

When solid acids are used as component (A) or component (D), it is sufficient that they should be used in an amount corresponding to those recommended in the above Conditions, calculated from the acidity ($mol \cdot kg^{-1}$ of solid acid) of each solid acid as a Lewis acid, which may be measured by well-known methods, e.g. as described by Shiba *et al*, "Catalyst" volume 4, page 58.

The amount of dehydrohalogenating agent used in the above processes is within the range of from 0.5 to 4 equivalents, more preferably from 0.9 to 2 equivalents, per equivalent of secondary hydroxy groups in the moiety of formula (II):

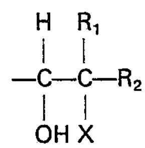

(II)

(in which $R_1$ and $R_2$ are as defined as above and X represents a halogen atom) of the hydroxypolyether intermediate. If this amount is too small, the epoxidization does not go to completion, whereas, if it is too large, the epoxy groups formed tend to undergo a subsequent ring-opening reaction.

It can be seen that the secondary hydroxy groups in the hydroxypolyether intermediate have the formula (II) since almost all secondary hydroxy groups are converted to epoxy groups by the dehydrohalogenation reaction.

The structure of the epoxidised polyether of the present invention will, of course, depend upon the process by which it was made and on the reagents employed. For example, in Process 1, where a glycol is used as component (C), oxytetramethylene units are bonded to both ends of the glycol residue and extend therefrom in both directions; when a triol is used, the units are bonded to an extend from the trio residue in three directions; and when a tetraol is used, the units are bonded to and extend from the tetraol residue in four directions. A structure of formula (I) containing an epoxy group is bonded to the end of each of these resulting oxytetramethylene polymeric chains.

When Process 2 is used, the resulting epoxidised polyether is believed to have a structure of formula (I) containing an epoxy group bonded to each end of the polyoxytetramethylene glycol residue.

In Process 1, tetrahydrofuran is polymerized in the presence of the three components (A), (B) and (C) and, if necessary, in a suitable solvent. The nature of the solvent employed is not particularly critical, provided that it has no adverse effect on the polymerization reaction; suitable solvents include hydrocarbons and halogenated hydrocarbons. Although the order in which components (A), (B) and (C) are added to the reaction system is not critical, we prefer first to mix components (A) and (C) with the tetrahydrofuran and then add component (B) or to mix components (B) and (C) with the tetrahydrofuran and then add component (A), since these sequences facilitate control of the polymerization. The polymerization temperature is not critical, provided that it is below the ceiling temperature for the polymerization of tetrahydrofuran; it is preferably within the range from −20°C to 40°C, in order to achieve best polymerization rates and yields. The polymerization is preferably effected under an atmosphere of an inert gas, such as nitrogen or argon.

In Process 2, the order in which the polyoxytetramethylene glycol and components (D) and (E) are added to the reaction system is not critical, but we usually find it convenient to mix component (D) with the polyoxytetramethylene glycol and then add component (E), or to mix component (E) with the

polyoxytetramethylene glycol and then add component (D). The reaction temperature is preferably within the range from −20°C to 50°C, since, if the temperature is too high, the polyoxytetramethylene glycol is liable to decompose whereas, if it is too low, the reaction rate is much reduced. If necessary, the reaction may be effected in the presence of a solvent which is inert to the polyoxytetramethylene glycol and to components (D) and (E). The reaction is preferably effected under an atmosphere of an inert gas.

In both Processes, dehydrohalogenation of the hydroxypolyether intermediate may be effected without isolation of the hydroxypolyether from the reaction solution. Alternatively, the reaction to produce the hydroxypolyether may be terminated by a well-known method (for example by adding an alkali, such as aqueous ammonia or aqueous sodium hydroxide, at a low temperature, by adding a small amount of an amine or by adding a large amount of water), after which the hydroxypolyether is recovered and then subjected to dehydrohalogenation. When recovering the hydroxypolyether, it is usually washed, after termination of the reaction, in order to remove components (A) and (D) etc.; washing is preferably effected with an aqueous alkaline solution, with an aqueous solution of a neutral salt (such as potassium dihydrogen phosphate) or with water. The hydroxypolyether is preferably extracted from the mixture with such an aqueous solution or with water by adding to the mixture a solvent which is immiscible with water. When using Process 1, unreacted tetrahydrofuran is usually present in the reaction mixture and this may be recovered by conventional means, such as distillation or steam-stripping, before or after washing and if desired, the recovered tetrahydrofuran may be reused. After it has been washed, the hydroxypolyether may be purified and recovered by drying, filtration of the resulting salt or similar methods.

When the recovered hydroxypolyether is subjected to dehydrohalogenation, the temperature of this reaction is not critical; however, in order to optimise reaction rate and yield, we prefer to carry out the reaction at a temperature within the range from −10°C to +120°C, more preferably from 0°C to 80°C. If necessary the viscosity of the reaction system may be reduced by adding a suitable solvent, for example, ethanol or t-butanol.

The amount of dehydrohalogenating agent used, where the dehydrohalogenation reaction is effected without first recovering the hydroxypolyether, can be estimated as the sum of the amount calculated from the amount of secondary hydroxy groups of formula (II) (determined after sampling part of the unrecovered hydroxypolyether and purifying the same) plus the amount required for neutralising component (A) or (D).

Where component (A) or component (B) has been adsorbed and removed by means of a solid alkali at a low temperature prior to dehydrohalogenation, the amount of secondary hydroxy groups is determined and this can be used by itself to calculate the amount of dehydrohalogenating agent necessary.

Well known methods may be employed for purifying and recovering the epoxidized polyether after the dehydrohalogenation. For example, the resulting salt may be filtered as it is from the reaction mixture after the dehydrohalogenation, or the reaction mixture may be heated, evacuated and dehydrated and the deposited material may then be filtered off and, if necessary, concentrated. Alternatively, the reaction mixture may be dehydrated (for example using a dehydrating agent, such as anhydrous sodium sulphate, or by adding a solvent which forms an azeotropic mixture with water and azeotropically evaporating the resulting mixture), after which the mixture is heated, evacauted and then concentrated. A further alternative is to wash the reaction mixture with water until it has become neutral, after which it is concentrated and then dried. In any of these methods, a suitable solvent may be added, in order to increase the recovery of the epoxidized polyether.

Of these methods, we prefer that in which the reaction mixture from the dehydrohalogenation reaction is heated, evacuated and then dehydrated, or is dehydrated by adding a relatively low boiling solvent which forms and azeotropic mixture with water, azeotropically evaporating the resulting mixture, removing the resulting salt and unreacted alkali by filtration and, if necessary, concentrating the residue. Since epoxy groups are relatively unstable in dilute aqueous alkaline solutions, the alkali number in the epoxidized polyether after purification must be kept low.

The number average molecular weight of the epoxidized polyether obtained as described above can be varied widely, by appropriate manipulation of the reaction conditions employed to synthesize the hydroxypolyether intermediate; when the epoxidized polyether is to be used to form an epoxy resin, we prefer that its number average molecular weight should be within the range from 300 to 20,000, more preferably from 500 to 10,000.

As will be seen more clearly from the subsequent Examples, the epoxidized polyether of the present invention has on average in each molecule at least 0.9, more preferably from 0.9 to 10, epoxy groups of formula (I).

The content of oxytetramethylene units in the epoxidized polyether of the present invention is preferably at least 60% by weight, more preferably at least 70% by weight. If the amount of these units is less than 60% by weight, epoxy resins produced from the resulting epoxidized polyether tend to have less satisfactory mechanical characteristics for most purposes.

The main molecular structures contained in the epoxidized polyether of the present invention are the epoxy group structure represented by formula (I) and the oxytetramethylene unit. However, the epoxidized polyether may contain residues of component (C) and may contain residues of the epihalohydrin, in addition to these main structures.

In order that an epoxy resin made from the epoxidized polyether of the present invention should be a

satisfactory electrical insulator, we prefer that the epoxidized polyether should have an average number of residual halogen atoms per molecule not greater than the value N given by the following equation:

$$N=(3\times f)-S$$

in which:

f is the epoxy group functionality of the epoxidized polyether, expressed as the number average molecular weight divided by the epoxy equivalent (grams per equivalent); and

S is the average number of secondary hydroxy groups represented by formula (II) present in one molecule of the epoxidized polyether.

Since the epoxidized polyether of the invention has, on average, at least, 0.9 epoxy groups per molecule, it can be used as a material for preparing epoxy resins; moreover, because it contains oxytetramethylene units, it has good flexibility, and has various other excellent characteristics, such as mechanical characteristics and impact resistance. Although the epoxidized polyether of the present invention can be used alone to produce an epoxy resin, it can also be used in admixture with other epoxy compounds, for example bisphenol A and, in this case, since the epoxidized polyether contains ether linkages in its polymeric chain, it has good miscibility with other epoxy compounds and with curing agents commonly used as additives; as a result, it gives good flexibility to the resulting epoxy resin.

## Example 1

A 7-liter glass autoclave equipped with a stirrer, a coiled condenser, a thermometer and an inlet and an outlet for nitrogen gas was purged with nitrogen gas, after which 3,010 g (41.8 moles) of dehydrated tetrahydrofuran, 189 g (2.05 moles) of dehydrated epichlorohydrin and 60.6 g (0.976 mole) of dehydrated ethylene glycol were charged thereinto. Subsequently, 29.7 g (.209 mole) of boron trifluoride-diethyl etherate was added with stirring, while the mixture was maintained at a temperature of 20°C, and reaction was effected at a temperature of 20°C for 4 hours, after which the reaction was terminated by the addition of 2 liters of distilled water. After completion of the reaction, the amount of unreacted tetrahydrofuran was determined by a gas chromatography to find that the conversion of tetrahydrofuran into a hydroxypolyether was 41%. Subsequently, unreacted tetrahydrofuran was distilled off under a vacuum of about 100 mmHg (0,1333 bar) while the reaction mixture was stirred, and 2 liters of toluene was then added, after which the resulting mixture was stirred for 15 minutes, and then allowed to stand, and the separated aqueous layer fraction was removed. To the thus obtained oil layer fraction was added 1 liter of distilled water, after which the resulting mixture was stirred for 15 minutes and then allowed to stand, and the thus separated aqueous layer fraction was removed. The same procedure as described above was further repeated twice to conduct washing until the pH of the resulting separated aqueous layer fraction became 7, after which the organic layer fraction was taken out and then filtered through a filter paper. The toluene was completely removed by distillation from the resulting filtrate by means of a rotary evaporator to obtain about 1,300 g of a colorless, liquid hydroxypolyether, which is hereinafter referred to as "Hydroxypolyether 1A".

The number average molecular weight of hydroxypolyether 1A was measured, by means of a vapor pressure osmosis type apparatus for measuring molecular weight, to find it to be 1,500. The hydroxyl value thereof obtained by phthalation reaction according to the method of JIS K 1557-1970 was 74.7 (mgKOH/g) ($g\cdot Kg^{-1}$). The number of hydroxyl groups per molecule of Hydroxypolyether 1A calculated from the number average molecular weight and the hydroxyl value, namely, the functionality thereof as hydroxyl group was 2.0.

Subsequently, 0.25 g of Hydroxypolyether 1A and 0.4 g of trichloroacetyl isocyanate were mixed in a sample tube for NMR (nuclear magnetic resonance absorption), and after about 30 minutes, the NMR spectrum of the resulting product was measured. In the spectrum thus obtained a signal due to a reaction product of the secondary hydroxyl group with the isocyanate was observed at 5.2 ppm based on the signal due to the tetramethylsilane added as an internal standard. On the other hand, a polyoxytetramethylene glycol having primary hydroxyl groups shows a signal due to a reaction product of the primary hydroxyl group with the isocyanate at 4.2 ppm, however no signal was observed at this position in the case of the sample of the present Example, that is to say, the presence of any primary hydroxyl group was not confirmed (Matsuda, "Guidance for Instrumental Analysis" published by Kagaku Dojin Sha, 1979, p. 34 was used as a reference).

Subsequently, 1,100 g of Hydroxypolyether 1A was placed in a 5-liter glass separable flask equipped with a stirrer, a thermometer and an inlet and an outlet for nitrogen gas, and said flask was purged with nitrogen gas, after which 1,000 ml of ethyl alcohol was added, and the resulting mixture was stirred to obtain a homogeneous solution. The temperature of the solution was maintained at 50°C on an oil bath, and 587 g (1.00 equivalent based on the secondary hydroxy groups) of an aqueous sodium hydroxide solution having a concentration of 10% by weight was gradually added thereto with stirring over a period of 1 hour. After completion of the addition, the stirring was further continued for 40 minutes to carry out dehydrohalogenation treatment. After the completion of the reaction, 500 ml of toluene was added, and the temperature was raised to 70°C, after which the flask was gradually evacuated while stirring the mixture, to remove the water in the reaction mixture by azeotropic distillation. The salt formed was removed by using

a 10 µm membrane filter made of Teflon, and the resulting residue was concentrated by means of a rotary evaporator to obtain 1,030 g of a colorless, liquid epoxidized polyether, which is hereinafter referred to as "Epoxidized Polyether 1B".

The number average molecular weight of Epoxidized Polyether 1B was measured by using a vapor pressure osmosis type apparatus for measuring molecular weight, to find it to be 1,430. Further, the epoxy equivalent thereof was measured by the hydrochloric acid-pyridine method ("Manual of Analytical Chemistry" second revised edition, p. 1077, Maruzen) to find it to be 726, and the functionality as epoxy group thereof was $1{,}430 \div 726 = 1.97$.

The infrared absorption spectrum of Epoxidized Polyether 1B was measured, and as a result, there were observed an absorption due to ether linkage at 1100 $cm^{-1}$ ($1{,}1 \times 10^5$ $m^{-1}$), an absorption due to oxytetramethylene unit at 740 $cm^{-1}$ ($7{,}4 \times 10$ $m^{-1}$), and an absorption due to epoxy group at 850 $cm^{-1}$ ($8{,}5 \times 10^4$ $m^{-1}$), but no absorption due to hydroxyl group in the vicinity of 3400 $cm^{-1}$ ($3{,}4.10^5$ $m^{-1}$) was observed.

Further, 0.25 g of Epoxidized Polyether 1B and 0.1 g of benzene were mixed, and the NMR spectrum of the resulting mixture was measured. A signal due to hydrogen (represented by $H\beta$ in the formula shown below) bonded to carbons not adjacent to the oxygen atom in the oxymethylene units was observed in the vicinity of 1.6 ppm based on a signal due to tetramethylsilane, and an absorption due to hydrogen of benzene was observed in the vicinity of 7.1 ppm:

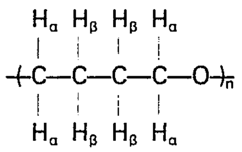

wherein n is an integer.

From the integral intensity ratio of the two and the number average molecular weight of Epoxidized Polyether 1B, the average number of the hydrogen atoms $H_\beta$'s present in one molecule of Epoxidized Polyether 1B was determined to be 67.2. On the basis of this value, the oxytetramethylene unit content by weight of Epoxidized Polyether 1B was determined to be 85%.

The chlorine atom content of Epoxidized Polyether 1B was determined by the flask combustion method ("Manual of Analytical Chemistry", second revised edition, p. 273, Maruzen) to be 0.2% by weight. Accordingly, the residual amount of chlorine atoms (the average number) contained in one molecule of Epoxidized Polyether 1B was found as very small as

$$\frac{0.2 \times 1{,}430}{35.5 \times 100} \fallingdotseq 0.08.$$

Example 2

The same 7-liter glass autoclave as in Example 1 was purged with nitrogen gas, after which 3,010 g (41.8 moles) of dehydrated tetrahydrofuran, 191 g (2.06 moles) of dehydrated epichlorohydrin, and 90.6 g (0.676 mole) of dehydrated trimethylolpropane were charged thereinto. At a temperature of 13°C, 35.1 g (0.251 mole) of a boron trifluoride-tetrahydrofuran complex was added with stirring, and reaction was effected for 5 hours while the temperature was maintained at 13°C. The amount of unreacted tetrahydrofuran was determined by a gas chromatography to find that the conversion of tetrahydrofuran into a hydroxypolyether was 44%. Subsequently, the hydroxypolyether was recovered from the mixture in the same manner as in Example 1, which is hereinafter referred to as "Hydroxypolyether 2A" Hydroxypolyether 2A had a number average molecular weight of 2,390 and a hydroxyl value of 70.3 as determined in the same manner as in Example 1, and the functionality as hydroxyl group thereof determined from these values was 2.99. Subsequently, Hydroxypolyether 2A was reacted with trichloroacetyl isocyanate in the same manner as in Example 1, and the NMR spectrum of the resulting product was measured. As a result, a signal due to a reaction product of secondary hydroxyl group with the isocyanate was observed at 5.2 ppm based on the signal of tetramethylsilane, but no signal due to a reaction product thereof with primary hydroxyl group was observed at a position near 4.2 ppm, that is to say, the presence of any primary hydroxyl group was not confirmed in Hydroxypolyether 2A obtained in the present Example.

Subsequently, 1,200 g of Hydroxypolyether 2A was charged into the same separable flask as in Example 1, and 1,200 ml of ethyl alcohol was added under a nitrogen gas atmosphere, after which the resulting mixture was converted into a homogeneous solution and maintained at a temperature of 60°C. To the solution was gradually added 463 g (1.10 equivalents based on the secondary hydroxyl groups) of an aqueous potassium hydroxide solution having a concentration of 20% by weight with stirring over a period of 50 minutes. After completion of the addition, the stirring was further continued for about 30 minutes to carry out dehydrohalogenation treatment. After completion of the reaction, 600 ml of toluene was added, and the temperature was raised to 70°C, after which the flask was gradually evacuated while stirring its

contents, to remove the water from the reaction mixture by azeotropic distillation. The salt formed was removed by filtration, and the resulting residue was concentrated to obtain 1,110 g of a colorless, liquid epoxidized polyether, which is referred to hereinafter as "Epoxidized Polyether 2B".

Epoxidized Polyether 2B had a number average molecular weight of 2,280 and a functionality f as epoxy group of 2.94 as determined in the same manner as in Example 1. The infrared absorption spectrum of Epoxidized Polyether 2B was measured, and as a result, there were observed absorptions due to ether linkage, epoxy group and oxytetramethylene unit at 1100 $cm^{-1}$ ($1,1\times10^5$ $m^{-1}$), 850 $cm^{-1}$ ($8,5\times10^4$ $m^{-1}$) and 740 $cm^{-1}$ ($7,4\times10^4$ $m^{-1}$), respectively.

Subsequently, the NMR of Epoxidized Polyether 2B was measured by use of benzene as an internal standard substance in the same manner as in Example 1, and on the basis of the integral intensity ratio of the absorption in the vicinity of 1.6 ppm and the absorption due to benzene at 7.1 ppm and the number average molecular weight of Epoxidized Polyether 2B, the oxytetramethylene unit content by weight of Epoxidized Polyether 2B was determined to be 86%.

The chlorine atom content of Epoxidized Polyether 2B was determined in the same manner as in Example 1 to be less than the measurement limit (0.1% by weight).

Example 3

The same 7-liter glass autoclave as in Example 1 was purged with nitrogen gas, after which 3,010 g (41.8 moles) of dehydrated tetrahydrofuran, 77.4 g (0.836 mole) of dehydrated epichlorohydrin and 29.0 g (0.322 mole) of dehydrated 1,4-butanediol were charged thereinto. At a temperature of 20°C, 59.3 g (0.418 mole) of boron trifluoride-diethyl etherate was added with stirring, and reaction was effected for 6 hours while the temperature was maintained at 20°C. The amount of unreacted tetrahydrofuran was determined by a gas chromatography to find that the conversion of tetrahydrofuran into a hydroxypolyether was 65%. Subsequently, the hydroxypolyether was recovered from the mixture in the same manner as in Example 1, which is referred to hereinafter as "Hydroxypolyether 3A". Hydroxypolyether 3A had a number average molecular weight of 5,800 and a hydroxyl value of 18.8 as determined in the same manner as in Example 1, and the functionality thereof as hydroxyl group calculated from these values was 1.95. Subsequently, Hydroxypolyether 3A was reacted with trichloroacetyl isocyanate in the same manner as in Example 1, and the NMR spectrum of the resulting product was measured. As a result, a signal due to a reaction product of secondary hydroxyl group with the isocyanate was observed at 5.2 ppm based on the signal of tetramethylsilane, but no signal due to a reaction product thereof with primary hydroxyl group was observed at a position near 4.2 ppm, that is to say, the presence of any primary hydroxyl group was not confirmed in Hydroxypolyether 3A obtained in the present Example.

Subsequently, 1,700 g of Hydroxypolyether 3A was charged into the same separable flask as in Example 1, and 1,200 ml of ethyl alcohol was added under a nitrogen gas atmosphere, after which the resulting mixture was converted into a homogeneous solution, and its temperature was maintained at 50°C. To the solution was gradually added 234 g (1.02 equivalents based on the secondary hydroxyl groups) of an aqueous sodium hydroxide solution having a concentration of 10% by weight with stirring over a period of 1 hour. After completion of the addition, the stirring was further continued for 40 minutes to carry out dehydrohalogenation treatment. After completion of the reaction, 800 ml of toluene was added, and 1,580 g of an epoxidized polyether was obtained in the same manner as in Example 1, which is referred to hereinafter as "Epoxidized Polyether 3B".

Epoxidized Polyether 3B had a number average molecular weight of 5,730 and a functionality f as epoxy group of 1.91 as determined in the same manner as in Example 1.

Subsequently, the NMR spectrum of Epoxidized Polyether 3B was measured by use of benzene as an internal standard substance in the same manner as in Example 1, and on the basis of the integral intensity ratio of an absorption in the vicinity of 1.6 ppm and an absorption due to benzene at 7.1 ppm and the number average molecular weight of Epoxidized Polyether 3B, the oxytetramethylene unit content by weight of Epoxidized Polyether 3B was determined to be 96%.

The chlorine atom content of Epoxidized Polyether 3B was determined in the same manner as in Example 1 to be 0.2% by weight. Accordingly, the residual amount of chlorine atoms (the average number) contained in one molecule of Epoxidized Polyether 3B was found as very small as

$$\frac{0.2\times5,730}{35.5\times100}\fallingdotseq0.32.$$

Example 4

The same 7-liter glass autoclave as in Example 1 was purged with nitrogen gas, after which 3,010 g (41.8 moles) of dehydrated tetrahydrofuran, 155 g (1.67 moles) of dehydrated epichlorohydrin and 57.7 g (0.93 mole) of dehydrated ethylene glycol were charged thereinto. At a temperature of 20°C, 234 g (1.67 moles) of a boron trifluoride-tetrahydrofuran complex was added with stirring, and reaction was effected for 4 hours while the temperature was maintained at 20°C. The amount of unreacted tetrahydrofuran was determined by a gas chromatography to find that the conversion of tetrahydrofuran into a hydroxypolyether was 75%. Subsequently, the hydroxypolyether was recovered from the mixture in the

same manner as in Example 1, which is referred to hereinafter as "Hydroxypolyether 4A". Hydroxypolyether 4A had a number average molecular weight of 2,730 and a hydroxyl value of 40.0 as determined in the same manner as in Example 1, and the functionality as hydroxyl group thereof calculated from these values was 1.95. Subsequently, Hydroxypolyether 4A was reacaed with trichloroacetyl isocyanate in the same manner as in Example 1, and the NMR spectrum of the resulting product was measured. As a result, a signal due to a reaction product of secondary hydroxyl group with the isocyanate was observed at 5.2 ppm based on the signal of tetramethylsilane, and a signal due to a reaction product thereof with primary hydroxyl group was faintly observed even at a position near 4.2 ppm. From the integral intensity ratio of the two, it was found that Hydroxypolyether 4A obtained in the present Example had about 94% of secondary hydroxyl group and about 6% of primary hydroxyl group.

Subsequently, 1,200 g of Hydroxypolyether 4A was subjected to dehydrohalogenation treatment in the same manner as in Example 2, except that the amount of the aqueous potassium hydroxide solution was 252 g (1.11 equivalents based on the secondary hydroxyl groups), to obtain 1,140 g of a colorless, liquid epoxidized polyether, which is referred to hereinafter as "Epoxidized Polyether 4B".

Epoxidized Polyether 4B had a number average molecular weight of 2,660 and a functionality f as epoxy group of 1.92 as determined in the same manner as in Example 1.

Subsequently, the NMR spectrum of Epoxidized Polyether 4B was measured by use of benzene as an internal standard substance in the same manner as in Example 1, and on the basis of the integral intensity ratio of an absorption in the vicinity of 1.6 ppm and an absorption due to benzene at 7.1 ppm and the number average molecular weight of Epoxidized Polyether 4B, the oxytetramethylene unit content by weight of Epoxidized Polyether 4B was determined to be 91%.

The chlorine atom content of Epoxidized Polyether 4B was determined in the same manner as in Example 1 to be less than the measurement limit (0.1% by weight).

Example 5

The same 7-liter glass autoclave as in Example 1 was purged with nitrogen gas, after which 3,010 g (41.8 moles) of dehydrated tetrahydrofuran, 116 g (1.25 moles) of dehydrated epichlorohydrin and 48.9 g (0.543 mole) of dehydrated 1,4-butanediol were charged thereinto. At a temperature of 20°C, 149 g (1.05 moles) of boron trifluoride-diethyl etherate was added with stirring, and reaction was effected for 6 hours while the temperature was maintained at 20°C. The amount of unreacted tetrahydrofuran was determined by a gas chromatography to find that the conversion of tetrahydrofuran into a hydroxypolyether was 79%. Subsequently, the hydroxypolyether was recovered from the mixture in the same manner as in Example 1, which is referred to hereinafter as "Hydroxypolyether 5A". Hydroxypolyether 5A had a number average molecular weight of 4,540 and a hydroxyl value of 23.9 as determined in the same manner as in Example 1, and the functionality as hydroxyl group was determined as 1.94 from these values. Subsequently, Hydroxypolyether 5A was reacted with trichloroacetyl isocyanate in the same manner as in Example 1, and the NMR spectrum of the reaction product was measured. As a result, a signal due to a reaction product of secondary hydroxyl group with the isocyanate was observed at 5.2 ppm based on the signal of tetramethylsilane, but no signal due to a reaction product thereof with primary hydroxyl group was observed at a position near 4.2 ppm, that is to say, the presence of any primary hydroxyl group was not confirmed in Hydroxypolyether 5A obtained in the present Example.

Subsequently, 1,600 g of Hydroxypolyether 5A was charged into the same separable flask as in Example 1, and 1,500 ml of tertiary butyl alcohol was added under a nitrogen gas atmosphere, after which the resulting mixture was converted into a homogeneous solution, and its temperature was maintained at 50°C. To the solution was gradually added 287 g (1.05 equivalents based on the secondary hydroxyl groups) of an aqueous sodium hydroxide solution having a concentration of 10% by weight with stirring over a period of 1 hour. After completion of the addition, the stirring was further continued for 40 minutes to carry out dehydrohalogenation treatment. After completion of the reaction, 800 ml of toluene was added, and 1.520 g of an epoxidized polyether was obtained in the same manner as in Example 1, which is referred to hereinafter as "Epoxidized Polyether 5B".

Epoxidized Polyether 5B had a number average molecular weight of 4,460 and a functionality f as epoxy group of 1.92 as determined in the same manner as in Example 1.

Subsequently, the NMR spectrum of Epoxidized Polyether 5B was measured by use of benzene as an internal standard substance in the same manner as in Example 1, and on the basis of the integral intensity ratio of an absorption in the vicinity of 1.6 ppm and an absorption due to benzene at 7.1 ppm and the number average molecular weight of Epoxidized Polyether 5B, the oxytetramethylene unit content by weight of Epoxidized Polyether 5B was determined to be 95%.

The chlorine atome content of Epoxidized Polyether 5B was determined in the same manner as in Example 1 to be 0.1% by weight. Accordingly, the residual amount of chlorine atoms (the average number) contained in one molecule of Epoxidized Polyether 5B was found as very small as

$$\frac{0.1\times 4,460}{35.5\times 100} \fallingdotseq 0.13.$$

Example 6

The same 7-liter glass autoclave as in Example 1 was purged with nitrogen gas, after which 3,010 g (41.8 moles) of dehydrated tetrahydrofuran, 82.3 g (0.914 mole) of dehydrated 1,4-butanediol and 59.3 g (0.418 mole) of boron trifluoride-diethyl etherate were charged thereinto. At a temperature of 25°C, 171 g (1.85 moles) of dehydrated epichlorohydrin was gradually added with stirring over a period of 2 hours, and the resulting mixture was further subjected to reaction for 4.5 hours while maintaining the temperature at 25°C. The amount of unreacted tetrahydrofuran was determined by a gas chromatography to find that the conversion of tetrahydrofuran into a hydroxypolyether was 43%. Subsequently, the hydroxypolyether was recovered from the mixture in the same manner as in Example 1, which is referred to hereinafter as "Hydroxypolyether 6A". Hydroxypolyether 6A had a number average molecular weight of 1,710 and a hydroxyl value of 65.5 as determined in the same manner as in Example 1, and the functionality as hydroxyl group thereof was determined to be 2.0 from these values. Subsequently, Hydroxypolyether 6A was reacted with trichloroacetyl isocyanate in the same manner as in Example 1, and the NMR spectrum of the resulting product was measured. As a result, a signal due to a reaction product of secondary hydroxyl group with the isocyante was observed at 5.2 ppm based on the signal of tetramethylsilane, but no signal due to a reaction product of primary hydroxyl group with the isocyanate was observed at a position near 4.2 ppm, that is to say, the presence of any primary hydroxyl group was not confirmed in Hydroxypolyether 6A obtained in the present Example.

Subsequently, 1,050 g of Hydroxypolyether 6A was charged into the same separable flask as in Example 1, and 1,000 ml of ethyl alcohol was added under a nitrogen gas atmosphere, after which the resulting mixture was converted into a homogeneous solution, and its temperature was maintained at 50°C. To the solution was gradually added 491 g (1.00 equivalent based on the secondary hydroxyl groups) of an aqueous sodium hydroxide solution having a concentration of 10% by weight with stirring over a period of 1 hour. After completion of the addition, the stirring was further continued for 40 minutes to carry out dehydrohalogenation treatment. After completion of the reaction, 800 ml of toluene was added, and 960 g of an epoxidized polyether was obtained in the same manner as in Example 1, which is referred to hereinafter as "Epodidized Polyether 6B".

Epoxidized Polyether 6B had a number average molecular weight of 1,640 and a functionality f as epoxy group of 1.97 as determined in the same manner as in Example 1.

Subsequently, the NMR spectrum of Epoxidized Polyether 6B was measured by use of benzene as an internal standard substance in the same manner as in Example 1, and on the basis of the integral intensity ratio of an absorption in the vicinity of 1.6 ppm and an absorption due to benzene at 7.1 ppm and the number average molecular weight of Epoxidized Polyether 6B, the oxytetramethylene unit content by weight of Epoxidized Polyether 6B was determined to be 93%.

The chlorine atom content of Epoxidized Polyether 6B was determined in the same manner as in Example 1 to be less than the measurement limit (0.1% by weight).

Further, the infrared absorption spectrum of Epoxidized Polyether 6B was measured, and as a result, an absorption due to oxytetramethylene unit was observed at 740 $cm^{-1}$. The relationship between the oxytetramethylene unit content by weight and the absorption intensity was obtained by using polyoxytetramethylene glycol as a standard substance, and by use of said relationship, the oxytetramethylene unit content by weight of Epoxidized Polyether 6B was determined to be about 94%. This result is about the same value as that of the analysis result of the above NMR spectrum.

Example 7

The same 7-liter glass autoclave as in Example 1 was purged with nitrogen gas, after which 3,010 g (41.8 moles) of dehydrated tetrahydrofuran, 86.8 g (0.522 mole) of dehydrated diglycerol and 292 g (2.09 moles) of a boron trifluoride-tetrahydrofuran complex were charged thereinto. At a temperature of 20°C, 294 g (2.15 moles) of dehydrated epibromohydrin was gradually added with stirring over a period of 2 hours, and the resulting mixture was further subjected to reaction for 3 hours while the temperature was maintained at 20°C. The amount of unreacted tetrahydrofuran was determined by a gas chromatography to find that the conversion of tetrahydrofuran into a hydroxypolyether was 51%. From the mixture was recovered hydroxypolyether in the same manner as in Example 1, which is referred to as hereinafter as "Hydroxypolyether 7A". The average molecular weight of Hydroxypolyether 7A determined in the same manner as in Example 1 was 3,670 and the hydroxyl value was 59.9. The functionality as hydroxyl group determined from these values was 3.92. Subsequently, Hydroxypolyether 7A was reacted with trichloroacetyl isocyanate in the same manner as in Example 1, and the NMR-spectrum of the resulting product was measured. As a result, a signal due to a reaction prdouct of secondary hydroxyl group with the isocyanate was observed at 5.2 ppm based on the signal of tetramethylsilane, but no signal due to a reaction product of primary hydroxyl group with the isocyanate was observed at a position near 4.2 ppm, that is to say, the presence of any primary hydroxyl group was not confirmed in the Hydroxypolyether 7A.

Subsequently, 1,300 g of Hydroxypolyether 7A was charged into th same separable flask as in Example 1, and 1,300 ml of ethyl alcohol was added under a nitrogen gas atmosphere, after which the resulting mixture was converted into a homogeneous solution and its temperature was maintained at 50°C. To the solution was gradually added 583 g (1.05 equivalents based on the secondary hydroxyl groups) of an aqueous sodium hydroxide solution having a concentration of 10% by weight with stirring over a period of

1 hour. After completion of the addition, the stirring was further continued for 40 minutes to carry out dehydrohalogenation treatment. After completion of the reaction, 800 ml of toluene was added, and 1,205 g of an epoxidized polyether was obtained in the same manner as in Example 1, which is referred to hereinafter as "Epoxidized Polyether 7B".

Epoxidized Polyether 7B had a number average molecular weight of 3,510 and a functionality f as epoxy group of 3.89 as determined in the same manner as in Example 1.

Subsequently, the NMR spectrum of Epoxidized Polyether 7B was measured by use of benzene as an internal standard substance in the same manner as in Example 1, and on the basis of the integral intensity ratio of an absorption in the vicinity of 1.6 ppm and an absorption due to benzene at 7.1 ppm and the number average molecular weight of Epoxidized Polyether 7B, the oxytetramethylene unit content by weight of Epoxidized Polyether 7B was determined to be 87%.

The bromine atom content of Epoxidized Polyether 7B was determined in the same manner as in Example 1 to be less than the measurement limit (0.1% by weight).

Example 8

A 5-liter separable flask equipped with a stirrer, a coiled condenser, a dropping funnel, a thermometer and an inlet and an outlet for nitrogen gas was purged with nitrogen gas, after which 800 g (0.748 mole) of a dehydrated polyoxytetramethylene glycol having a number average molecular weight of 1,070, 1 liter of dehydrated dioxane and 42.4 g (0.299 mole) of boron trifluoride-diethyl etherate were charged thereinto. Subsequently, 152 g (1.64 moles) of dehydrated epichlorohydrin was added with stirring from the dropping funnel over a period of 2 hours while maintaining the temperature of the mixture at 15°C by means of the coiled condenser. After completion of the dropwise addition, the stirring was further continued for 5 hours, after which the reaction was terminated by adding 1 liter of distilled water. To the reaction solution was added 1.5 liters of toluene, and the resulting mixture was stirred for 15 minutes and then allowed to stand, after which the separated aqueous layer fraction was removed. To the thus obtained oil layer fraction was added 1 liter of distilled water, and the resulting mixture was stirred for 15 minutes and then allowed to stand, after which the separated aqueous layer fraction was removed. The same procedure as described above was further repeated twice to conduct washing until the pH of the resulting separated aqueous layer fraction became 7, after which the organic layer fraction was taken out and then filtered through a filter paper. The toluene was completely removed by distillation from the resulting filtrate by means of a rotary evaporator to obtain 910 g of a colorless, liquid hydroxypolyether, which is referred to hereinafter as "Hydroxypolyether 8A". Hydroxypolyether 8A had a number average molecular weight of 1,280 and a hydroxyl value of 86.3 as determined in the same manner as in Example 1, and the functionality as hydroxyl group thereof determined from these values was 1.97. Subsequently, "Hydroxypolyether 8A" was reacted with trichloroacetyl isocyanate in the same manner as in Example 1, and the NMR spectrum of the resulting product was measured and then analyzed to find that 97% of the hydroxyl groups were secondary and the balance 3% thereof were primary.

Subsequently, 700 g of Hydroxypolyether 7A was charged into the same 5-liter separable flask as in Example 1, and 700 ml of ethyl alcohol was added under a nitrogen gas atmosphere, after which the resulting mixture was converted into a homogeneous solution, and its temperature was maintained at 50°C. To the solution was gradually added 435 g (1.04 equivalents based on the secondary hydroxyl groups) of an aqueous sodium hydroxide solution having a concentration of 10% by weight with stirring over a period of 1 hour. After completion of the addition, the stirring was further continued for 40 minutes to carry out dehydrohalogenation treatment. After completion of the reaction, 800 ml of toluene was added, and 610 g of an epoxidized polyether was obtained in the same manner as in Example 1, which is referred to hereinafter as "Epoxidized Polyether 8B".

Epoxidized Polyether 8B had a number average molecular weight of 1,180 and a functionality f as epoxy group of 1.90 as determined in the same manner as in Example 1.

Subsequently, the NMR spectrum of Epoxidized Polyether 8B was measured by use of benzene as an internal standard substance in the same manner as in Example 1, and on the basis of the integral intensity ratio of an absorption in the vicinity of 1.6 ppm and an absorption due to benzene at 7.1 ppm and the number average molecular weight of Epoxidized Polyether 8B, the oxytetramethylene unit content by weight of Epoxidized Polyether 8B was determined to be 90%.

The chlorine atom content of Epoxidized Polyether 8B was determined in the same manner as in Example 1 to be 0.3% by weight. Accordingly, the residual number of chlorine atoms (the average number) contained in one molecule of Epoxidized Polyether 8B was found as very small as

$$\frac{0.3\times 1{,}180}{35.5\times 100}=0.10.$$

Example 9

The same 5-liter separable flask as in Example 8 was purged with nitrogen gas, after which 930 g (0.477 mole) of dehydrated polyoxytetramethylene glycol having a number average molecular weight of 1950, 1 liter of dehydrated dioxane and 22.7 g (0.194 mole) of a boron trifluoride-tetrahydrofuran complex were

charged thereinto. Subsequently, while keeping the temperature of the mixture at 20°C by means of the coiled condenser, 137 g (1.00 mole) of dehydrated epibromohydrin was dropped thereinto from a dropping funnel with stirring over 1.5 hours. After completion of the dropwise addition, the stirring was continued for a further 4 hours, and 1 liter of distilled water was then added to terminate the reaction. Subsequently, the same procedure as in Example 8 was repeated to obtain 1,020 g of colorless, liquid hydroxypolyether from the mixture. This hydroxypolyether is referred to hereinafter as "Hydroxypolyether 9A". Hydroxypolyether 9A had a number average molecular weight of 2,240 and a hydroxyl value of 49.1 as determined in the same manner as in Example 1, and the functionality as hydroxyl group thereof determined from these values was 1.96. Subsequently, Hydroxypolyether 9A was reacted with trichloroacetyl isocyanate in the same manner as in Example 1, and the NMR spectrum of the resulting product was measured and then analyzed to find that 96% of the hydroxyl groups were secondary and the balance 4% thereof were primary.

Subsequently, 800 g of Hydroxypolyether 9A was charged into the same 5-liter separable flask as in Example 1, after which 750 ml of ethyl alcohol was added thereto under a nitrogen atmosphere to form a uniform solution, and the teperature thereof was kept at 50°C. To the solution was gradually added 396 g of an aqueous potassium hydroxide solution of a concentration of 10% by weight (1.05 equivalents based on the secondary hydroxyl groups) with stirring over one hour. After completion of the addition, the stirring was continued for a further 40 minutes to subject the solution to dehalogenation treatment. After completion of the reaction, 800 ml of toluene was added thereto and the same procedure as in Example 1 was repeated to obtain 705 g of epoxidized polyether. This is referred to hereinafter as "Epoxidized Polyether 9B".

Epoxidized Polyether 9B had a number average molecular weight of 2,070 and a functionality f as epoxy group of 1.92 as determined in the same manner as in Example 1.

Subsequently, the NMR spectrum of Epoxidized Polyether 9B was measured by use of benzene as an internal standard substance in the same manner as in Example 1, and on the basis of the integral intensity ratio of an absorption in the vicinity of 1.6 ppm and an absorption due to benzene at 7.1 ppm and the number average molecular weight of Epoxidized Polyether 9B, the oxytetramethylene unit content by weight of Epoxidized Polyether 9B was determined to be 94%.

The chlorine atom content of Epoxidized Polyether 9B was determined in the same manner as in Example 1 to be less than the measurement limit (0.1% by weight).

Example 10

A 7-liter stainless steel autoclave equipped with a stirrer, a coiled condenser, a thermometer and an inlet and an outlet for nitrogen gas was purged with nitrogen gas, after which 3,000 g (41.7 moles) of dehydrated tetrahydrofuran, 175 g (1.89 moles) of dehydrated epichlorohydrin and 84.2 g (1.83 moles) of dehydrated ethyl alcohol were charged thereinto. Subsequently, 12.2 g (0.180 mole) of boron trifluoride gas was added from a bomb with stirring, while the mixture was maintained at a temperature of 17°C, and reaction was effected at a temperature of 17°C for 5 hours, after which the reaction was terminated by the addition of 2 liters of distilled water. After completion of the reaction, the amount of unreacted tetrahydrofuran was determined by a gas chromatography to find that the conversion of tetrahydrofuran into a hydroxypolyether was 46%. Subsequently, in the same manner as in Example 1, 1,580 g of hydroxypolyether was recovered from the mixture. This hydroxypolyether is referred to hereinafter as "Hydroxypolyether 10A".

The number average molecular weight of Hydroxypolyether 10A was measured, by means of a vapor pressure osmosis type apparatus for measuring molecular weight, to find it to be 880. The hydroxyl value thereof obtained in the same manner as in Example 1 was 63.7 (mgKOH/g) ($g \cdot Kg^{-1}$). The number of hydroxyl groups per molecule of Hydroxypolyether 10A calculated from the number average molecular weight and the hydroxyl value, namely, the functionality thereof as hydroxyl group was 1.0.

Subsequently, 0.4 g of Hydroxypolyether 10A and 0.4 g of trichloroacetyl isocyanate were reacted with each other and the NMR spectrum of the resulting product was measured in the same manner as in Example 1. As a result, the presence of primary hydroxyl groups was not confirmed in the hydroxypolyether obtained in the present Example.

Subsequently, from 1,200 g of Hydroxypolyether 10A, 1,000 ml of ethyl alcohol and 562 g (1.03 equivalents based on the secondary hydroxyl groups) of an aqueous sodium hydroxide solution having a concentration of 10% by weight was obtained 1100 g of colorless, liquid epoxidized polyether in the same manner as in Example 1. This epoxidized polyether is referred to hereinafter as "Epoxidized Polyether 10B".

The number average molecular weight of Epoxidized Polyether 10B was 840, and the functionality f as epoxy group thereof was 0.99.

In the same manner as in Example 1, the oxytetramethylene unit content by weight in Epoxidized Polyether 10B was measured to find it to be 87%. Furthermore, the chlorine atom content of Epoxidized Polyether was measured to find it to be less than the measurement limit.

Example 11

The same 7-liter stainless steel autoclave as in Example 10 was purged with nitrogen gas, after which

3,050 g (42.4 moles) of dehydrated tetrahydrofuran, 190 g (2.05 moles) of dehydrated epichlorohydrin and 88.2 g (0.980 mole) of dehydrated 1,4-butanediol were charged thereinto. At a temperature of 20°C, 25.2 g (0.200 mole) of phosphorus pentafluoride gas generated from phosphorous pentachloride was added with stirring, and reaction was effected for 4 hours while keeping the temperature at 20°C, after which 2 liters of distilled water was added to terminate the reaction. After completion of the reaction, the amount of unreacted tetrahydrofuran was determined by a gas chromatography to find that the conversion of tetrahydrofuran into a hydroxypolyether was 43%. Subsequently, about 1,498 g of colorless, liquid hydroxypolyether was recovered from the mixture in the same manner as in Example 1, which is referred to hereinafter as "Hydroxypolyether 11A". Hydroxypolyether 11A had a number average molecular weight of 1,580 and a hydroxyl value of 70.7 as determined in the same manner as in Example 1, and the functionality as hydroxyl group thereof determined from these values was 1.99. Subsequently, Hydroxypolyether 11A was reacted with trichloroacetyl isocyanate in the same manner as in Example 1, and the NMR spectrum of the resulting product was measured. As a result, the presence of any primary hydroxyl group was not confirmed in Hydroxypolyether 11A.

Subsequently, from 1,100 g of Hydroxypolyether 11A, 565 g (1.02 equivalents based on the hydroxyl groups) of an aqueous sodium hydroxide solution having a concentration of 10% by weight and 950 ml of ethyl alcohol was obtained 990 g of epoxidized polyether in the same manner as in Example 1. This is referred to hereinafter as "Epoxidized Polyether 11B".

Epoxidized Polyether 11B had a number average molecular weight of 1,510 and a functionality f as epoxy group of 1.96 as determined in the same manner as in Example 1. Moreover, the oxytetramethylene unit content by weight of Epoxidized Polyether 11B was determined to be 90%, and the chlorine atom content of Epoxidized Polyether 11B was only 0.2% by weight.

Example 12

A mixture of 50 g of Epoxidized Polyether 1B obtained in Example 1, 50 g of bisphenol A type epoxy resin (epoxy equivalent: 190) and 7 g of triethylenetetramine was subjected to reaction at 40°C for 10 days to obtain a cured product. The tensile strength of this cured product was 410 $kg/cm^2$ and the elongation thereof was 8%.

On the other hand, from 100 g of bisphenol A type epoxy resin (epoxy equivalent: 190) and 10 g of triethylenetetramine was obtained a cured product, which had a tensile strength of 460 $kg/cm^2$ ($4,5\times10^7$ $N\cdot m^{-1}$) and an elongation of 2%.

Example 13

A mixture of 40 g of Epoxidized Polyether 2B obtained in Example 2, 60 g of bisphenol A type epoxy resin (epoxy equivalent: 190), 60 g of a mixture (9:1 by weight) of tetrahydrophthalic anhydride and hexahydrophthalic anhydride, and 1 g of tris(dimethylaminomethyl)phenol was subjected to reaction at 100°C for 2 hours and then at 130°C for 4 hours to obtain a cured product. This cured product had a tensile strength of 640 $kg/cm^2$ and an elongation of 7%. On the other hand, the cured product obtained from 100 g of bisphenol A type epoxy resin (epoxy equivalent: 190), 80 g of a mixture (9:1 by weight) of tetrahydrophthalic anhydride and hexahydrophthalic anhydride and 1 g of tris(dimethylaminomethyl)phenol in the same manner as above had a tensile strength of 720 $kg/cm^2$ ($7,05\times10^7$ $n\cdot m^{-1}$) and an elongation of only 1%.

**Claims**

1. A process for producing an epoxidized polyether having a halogen content of 0.3% by weight or less and on average per molecule at least 0.9 epoxy group represented by the formula (I):

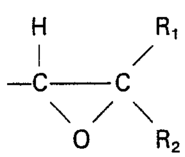

(I)

in which $R_1$ and $R_2$, which may be the same or different each represents a hydrogen atom or an alkyl group which comprises polymerizing tetrahydrofuran in the presence of: component (A) consisting of a Lewis acid and/or ether complex of a Lewis acid; component (B) consisting of an epihalohydrin; and component (C) consisting of a hydrocarbon compound having at least one hydroxy group per molecule, to prepare a hydroxypolyether and then dehydrohalogenating said hydroxypolyether, characterized in that:

(i) in the polymerization, the amounts of tetrahydrofuran and components (A), (B) and (C) and the quantitative relationship between said components satisfy the following conditions (1), (2) and (3);

Condition (1) is that the molar ratio of component (A) to tetrahydrofuran is from 0.0001:1 to 0.1:1.

Condition (2) is that the molar ratio of component (B) to tetrahydrofuran is 0.2:1 or less, and

Condition (3) is that the ratio of the number of moles of component (B) to the gram equivalents of hydroxy groups in component (C) is from 0.8:1 to 2:1, and

(ii) the amount of dehydrohalogenating agent used for the or each dehydrohalogenation treatment is within the range of from 0.5 to 4 equivalents per gram equivalent of secondary hydroxy groups of formula (II):

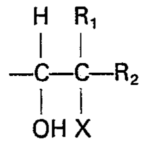

(II)

in which $R_1$ and $R_2$ are as defined above as to formula (I) and X represents a halogen atom, in said hydroxypolyether.

2. A process for producing an epoxidized polyether, having a halogen content of 0.3% by weight or less and on average per molecule at least 0.9 epoxy group represented by the formula (I):

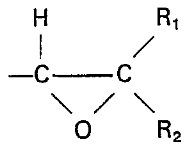

(I)

in which $R_1$ and $R_2$, which may be the same or different each represents a hydrogen atom or an alkyl group which comprises reacting a polyoxytetramethylene glycol with: component (D) consisting of a Lewis acid and/or an ether complex of a Lewis acid; and component (E) consisting of an epihalohydrin, to produce a hydroxypolyether, and then dehydrohalogenating said hydroxypolyether, characterized in that:

(i) in the reaction of said polyoxytetramethylene glycol, the amounts of said polyoxytetramethylene glycol and components (D) and (E) and the quantitative relationship between them satisfy the following conditions (4) and (5):

Condition (4) is that the ratio of the number of moles of component (D) to the gram equivalents of hydroxy groups in the polyoxytetramethylene glycol is from 0.02:1 to 2:1, and

Condition (5) is that the ratio of the number of moles of component (E) to the gram equivalent of hydroxy groups in the polyoxytetramethylene glycol is from 0.5:1 to 3:1; and

(ii) the amount of dehydrohalogenating agent used for the or each dehydrohalogenation treatment is within the range of from 0.5 to 4 equivalents per gram equivalent of secondary hydroxy groups of formula (II):

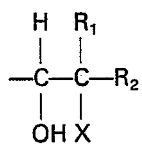

(II)

in which $R_1$ and $R_2$ are as defined above as to formula (I) and X represents a halogen atom in said hydroxypolyether.

**Patentansprüche**

1. Verfahren zur Herstellung eines epoxidierten Polyethers mit einem Halogengehalt von 0,3 Gew.-% oder darunter und im Mittel mindestens 0,9 Epoxygruppen je Molekül der Formel (I),

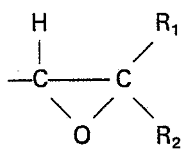

(I)

in der bedeuten:

$R_1$ und $R_2$, gleich oder verschieden, je Wasserstoff oder Alkyl, durch Polymerisieren von Tetrahydrofuran in Gegenwart von:

(A) einer Lewis-Säure und/oder eines Etherkomplexes einer Lewis-Säure,

(B) eines Epihalogenhydrins und

(C) eines Kohlenwasserstoffs mit mindestens einer Hydroxylgruppe je Molekül, zu einem Hydroxypolyether und

Dehydrohalogenieren des Hydroxypolyethers, dadurch gekennzeichnet, daß

(i) in der Polymerisation Tetrahydrofuran und die Komponenten (A), (B) und (C) in solchen Mengeverhältnissen verwendet werden, daß die folgenden Bedingungen (1), (2) und (3) erfüllt sind:

(1) Das Molverhältnis von Komponente (A) zu Tetrahydrofuran beträgt von 0,0001:1 bis 0,1:1,

(2) das Molverhältnis von Komponente (B) zu Tetrahydrofuran beträgt 0,2:1 oder darunter, und

(3) das Verhältnis von Molzahl der Komponente (B) zu Grammäquivalenten der Hydroxylgruppen in Komponente (C) beträgt von 0,8:1 bis 2:1, und

(ii) die Menge an für die oder jede Dehydrohalogenierung verwendetem Dehydrohalogenierungsmittel beträgt von 0,5 bis 4 Aquivalent je Grammäquivalent sekundäre Hydroxylgruppen der Formel (II) des Hydroxypolyethers

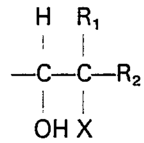

(II)

in der $R_1$ und $R_2$ wie in Formel (I) definiert sind und X Halogen ist.

2. Verfahren zur Herstellung eines epoxidierten Polyethers mit einem Halogengehalt von 0,3 Gew.-% oder darunter und im Mittel mindestens 0,9 Epoxygruppen je Molekül der Formel (I)

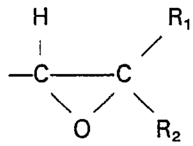

(I)

wobei bedeuten:

$R_1$ und $R_2$ gleich oder verschieden, je Wasserstoff oder Alkyl, durch Umsetzen eines Polyoxytetramethylenglykols mit

(D) einer Lewis-Säure und/oder einem Etherkomplex einer Lewis-Säure und

(E) einem Epihalohydrin zu einem Hydroxypolyether und Dehydrohalogenieren des Hydroxypolyethers, dadurch gekennzeichnet, daß

(i) in der Umsetzung des Polyoxytetramethylenglykols Polyoxytetramethylenglykol und die Komponenten (D) und (E) in solchen Mengenverhältnissen verwendet werden, daß sie folgende Bedingungen (4) und (5) erfüllen:

(4) Das Verhältnis der Molzahl der Komponente (D) zu Grammäquivalenten der Hydroxylgruppen im Polyoxytetramethylenglykol beträgt von 0,02:1 bis 2:1 und

(5) das Verhältnis der Molzahl von Komponente (E) zu Grammäquivalenten der Hydroxylgruppen in dem Polyoxytetramethylenglykol beträgt von 0,5:1 bis 3:1, und

(ii) die Menge an für die oder jede Dehydrohalogenierung verwendetem Dehydrohalogenierungsmittel beträgt von 0,5 bis 4 Äquivalente je Grammäquivalent sekundäre Hydroxylgruppen der Formel (II) im Hydroxypolyether

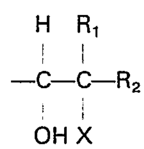

(II)

in der $R_1$ und $R_2$ wie in Formel (I) definiert sind und X Halogen ist.

**Revendications**

1. Procédé pour la préparation d'un polyéther époxydé ayant une teneur en halogène de 0,3% en poids ou moins, et comportant en moyenne au moins 0,9 groupe époxy par molécule, représenté par la formule (I)

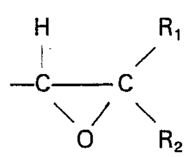

(I)

dans laquelle $R_1$ et $R_2$, qui peuvent être identiques ou différents, représentent chacun un atome d'hydrogène ou un groupe alkyle, lequel procédé comprend la polymérisation du tétrahydrofuranne en présence d'un composant (A), consistant en un acide de Lewis et/ou un complexe d'un acide de Lewis avec un éther, un composant (B) consistant en une épihalohydrine, et un composant (C) consistant en un

composé hydrocarboné comportant au moins un groupe hydroxy par molécule, pour l'obtention d'un hydroxypolyéther, et ensuite la déshydrohalogénation dudit hydroxypolyéther, procédé caractérisé en ce que

(I) dans la polymérisation, les quantités de tétrahydrofuranne et des composants (A), (B) et (C) et les proportions entre lesdits composants satisfont aux conditions (1), (2) et (3) suivantes:

la condition (1) est que le rapport molaire du composant (A) au tétrahydrofuranne soit de 0,0001:1 à 0,1:1,

la condition (2) est que le rapport molaire du composant (B) au tétrahydrofuranne s'élève à 0,2:1 ou moins, et

la condition (3) est que le rapport du nombre de moles du composant (B) au nombre d'équivalents—grammes, des groupes hydroxy dans le composant (C) soit de 0,8:1 à 2:1; et

(II) la quantité de l'agent de déshydrohalogénation utilisée pour le traitement ou chaque traitement de déshydrohalogénation est dans la plage allant de 0,5 à 4 équivalents par équivalent—gramme, des groupes hydroxy secondaires du fragment de formule (II)

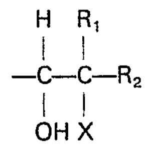

(II)

dans laquelle $R_1$ et $R_2$ sont tels que définis plus haut pour la formule (I) et X représente un atome d'halogène, dans ledit hydroxypolyéther.

2. Procédé pour la préparation d'un polyéther époxydé ayant un teneur en halogène de 0,3% en poids ou moins, et comportant en moyenne au moins 0,9 groupe époxy par molécule, représenté par la formule (I)

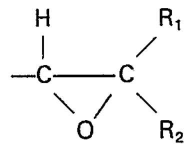

(I)

dans laquelle $R_1$ et $R_2$, qui peuvent être identiques ou différents, représentent chacun un atome d'hydrogène ou un groupe alkyle, lequel procédé comprend la réaction d'un polyoxytétraméthylèneglycol avec un composant (D), consistant en un acide de Lewis et/ou un complexe d'un acide de Lewis avec un éther, et un composant (E) consistant en une épihalohydrine, pour l'obtention d'un hydroxypolyéther, et ensuite la déshydrohalogénation dudit hydroxypolyéther, procédé caractérisé en ce que

(I) dans la réaction dudit polyoxytétraméthylèneglycol, les quantités dudit polyoxytétraméthylèneglycol et des composants (D) et (E), et les proportions entre celles-ci, satisfont aux conditions (4) et (5) suivantes:

la condition (4) est que le rapport du nombre de moles du composant (D) au nombre d'équivalents-gramme des groupes hydroxy dans le polyoxytétraméthylèneglycol soit de 0,02:1 à 2:1, et

la condition (5) est que le rapport du nombre de moles du composant (E) au nombre d'équivalents-gramme, des groupes hydroxy dans le polyoxytétraméthylèneglycol soit de 0,5:1 à 3:1; et

(II) la quantité de l'agent de déshydrohalogénation utilisée pour le traitement ou chaque traitement de déshydrohalogènation est dans la plage allant de 0,5 à 4 équivalents par équivalent—gramme des groupes hydroxy secondaires du fragment de formule (II)

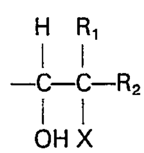

(II)

dans laquelle $R_1$ et $R_2$ sont tels que définis plus haut pour la formule (I) et X représente un atome d'halogène, dans ledit hydroxypolyéther.